# EUROPEAN PATENT APPLICATION

(11) **EP 2 259 416 A2**
(43) Date of publication of application: **08.12.2010**
(21) Application number: 10164647.9
(22) Date of filing: 01.06.2010
(51) Int. Cl.: H02M 3/158

(54) **System and method for ORing phases to overcome duty cycle limitations in a multiphase boost converter**

(30) Priority: 02.06.2009 US 183304 P; 04.09.2009 US 240038 P; 31.12.2009 US 651012
(71) Applicant: Intersil Americas Inc., Milpitas, CA 95035 (US)
(72) Inventor: Moussaoui, Zaki, San Carlos, CA 94070 (US); Qin, Jifeng, San Jose, CA 95131 (US); Angkititrakui, Sitthipong, Fremont, CA 95538 (US)
(74) Representative: Fleuchaus, Michael A.

(57) **Abstract**

A multiphase boost converter includes a multiphase PWM controller for generating a plurality of PWM signals. A plurality of boost converters are each associated with a separate phase connected between an input voltage node and an output voltage node and generating an output voltage responsive to an input voltage and the plurality of PWM signals. Phase nodes of each of the plurality of boost converters are ORed to each other.

## Description

### CROSS-REFERENCE TO RELATED APPLICATIONS

This applications claims the benefit of U.S. Provisional Application for Patent Serial No. 61/240,038, filed on September 4, 2009, entitled SYSTEM AND METHOD FOR ORING PHASES TO OVERCOME DUTY CYCLE LIMITATIONS IN A MULTIPHASE BOOST CONVERTER and U.S. Provisional Application for Patent Serial No. 61/183,304, filed on June 2, 2009, entitled SYSTEM AND METHOD FOR ORING PHASES TO OVERCOME DUTY CYCLE LIMITATIONS IN A MULTIPHASE BOOST CONVERTER, each of which is incorporated herein by reference.

### TECHNICAL FIELD

The present invention relates to multiphase boost converters, and more particularly, to multiphase boost converters wherein the phase node of each phase of the multiphase boost converters are ORed together.

### BACKGROUND

Single phase boost converters normally include a boost section including an inductor and at least one switching transistor. A rectifying and filtering section includes a diode and capacitor. Control of the boost regulator is achieved via the turning on and turning off of the switch within the voltage boost section. The value of the boosted voltage from the circuit is dependent upon the duty cycle of a control signal applied to the switching transistor. Since the integral of the voltage appearing across the inductor over a complete duty cycle is zero at steady state operation, the use of higher duty cycles providing longer periods of switch conduction time will increase the peak current storage of the inductor and result in an increase of the boosted voltage. When a multiphase boost converter is utilized rather than a single phase boost converter additional limitations are imposed on the circuit. In a conventional multiphase application there are maximum duty cycle limitations that are imposed within multiphase boost converter applications. The typical maximum duty cycle normally ranges from 50% to around 90%. It is desired in order to achieve better multiphase boost converter performance to be able to overcome these multiphase limitations within multiphase boost converters.

### SUMMARY

The present invention, as disclosed and described herein, in one aspect thereof, comprises a multiphase boost converter including a multiphase PWM controller for generating a plurality of PWM signals. A plurality of boost converters are each associated with a separate phase of the multiphase converter are connected between an input voltage node and an output voltage node. Each of the plurality of boost converters generate an output voltage that is responsive to the input voltage and one of the plurality of PWM signals from the multiphase PWM controller. Each phase node of the plurality of boost converters are ORed together with each other.

### BRIEF DESCRIPTION OF THE DRAWINGS

For a more complete understanding, reference is now made to the following description taken in conjunction with the accompanying Drawings in which:

Fig. 1 is a schematic diagram of a boost converter;

Fig. 2a is a block diagram of the ORing phase solution utilizing a standard boost converter;

Fig. 2b illustrates the wave forms associated with the operation of the circuit of Fig. 2a;

Fig. 3 is a schematic block diagram of the ORing phase solution utilizing a synchronized boost converter;

Fig. 4 is a block diagram of an alternative ORing chip logic solution using a standard boost converter; and

Fig. 5 is an ORing chip logic solution utilizing a synchronized boost converter

### DETAILED DESCRIPTION

Referring now to the drawings, wherein like reference numbers are used herein to designate like elements throughout, the various views and embodiments of a system and method for ORing phases to overcome duty cycle limitations in a multiphase boost converter are illustrated and described, and other possible embodiments are described. The figures are not necessarily drawn to scale, and in some instances the drawings have been exaggerated and/or simplified in places for illustrative purposes only. One of ordinary skill in the art will appreciate the many possible applications and variations based on the following examples of possible embodiments.

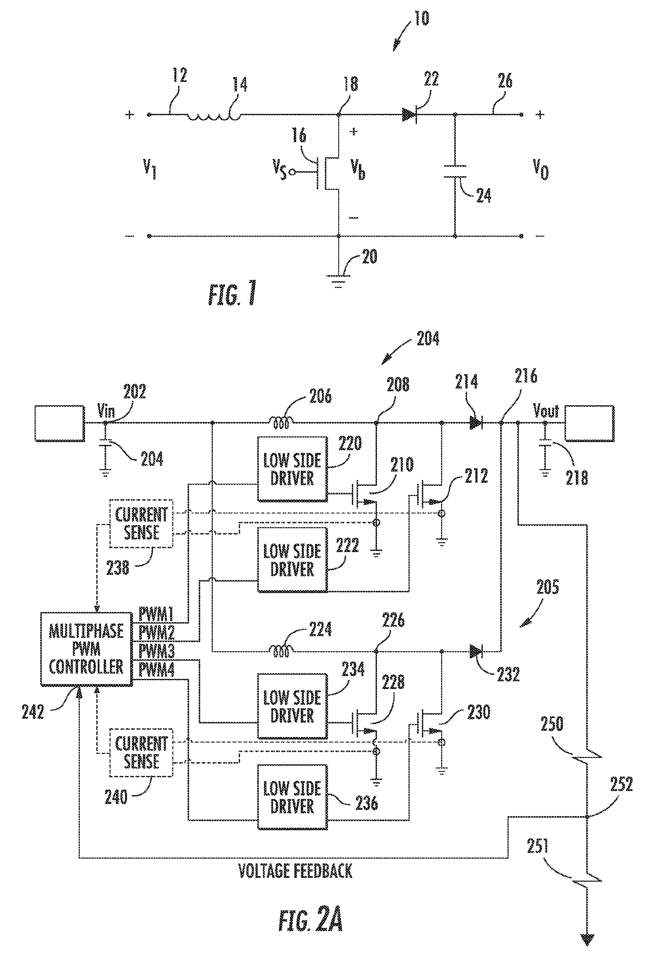

Referring now to the drawings, and more particularly to Fig. 1, there is illustrated a schematic diagram illustrating the basic design of a DC/DC boost converter 10. The boost converter 10 comprises a voltage boost section formed by inductor 14 and FET transistor 16. A half wave rectifying and filtering section includes a diode 22 and a capacitor 24. Operation of the circuit is controlled by switching control signals applied to the gate of the transistor 16. During the conduction time of the transistor 16, the input voltage V_{IN} provided at the input node 12 passes through the inductor 14. When the transistor 16 is switched OFF, the polarity of the voltage potential appearing across the inductor 14 reverses and is combined with the input voltage V_{IN} to provide a boosted voltage V_{B} at node 18. Since the switch 16 is periodically operated, the voltage potential V_{B} appearing at node 18 is an AC voltage potential having a peak voltage potential that is inherently greater than the input voltage V_{IN}.

The value of the boosted voltage V_{B} is dependent on the duty cycle of the control signal applied to the switch 16. Since the integral of the voltage appearing across the inductor 14 over a complete duty cycle must be zero, as required for steady state operation, the use of increasingly higher duty cycles, providing longer periods of switched conduction time, will directly increase the peak current storage of the inductor 14. This results in a corresponding increase in the boosted voltage potential V_{B}. The boosted voltage V_{B} is applied to the diode 22 and capacitor 24 AC to DC conversion circuit to provide a high voltage DC output Vo.

When a multiphase boost converter application is utilized rather than the single phase application illustrated with respect to Fig. 1 additional limitations are imposed. In a conventional multiphase application there are maximum duty cycle limitations that are imposed upon presently utilized multiphase boost converter configurations. The typical maximum duty cycle parameter ranges from 50% to around 90%..

Referring now to Fig. 2a, there is illustrated a multiphase boost converter wherein the phase nodes of each of the boost converters are ORed together. The input voltage V_{IN} is applied at node 202 to a first boost converter 204 and a second boost converter 205. A capacitor 204 is connected between node 202 and ground. Boost regulator 204 includes an inductor 206 connected between node 202 and node 208. An N-channel transistor 210 has its drain/source path connected between node 208 and ground. A transistor 212 comprises an N-channel transistor having its drain/source path connected node 208 and ground. A diode 214 has its anode connected to node 208 and its cathode connected to the output voltage node 216. A capacitor 218 is connected between node 216 and ground. The gates of transistors 210 and 212 are connected to receive an output signal from the low side gate drivers 220 and 222, respectively.

The boost regulator 205 includes an inductor 224 and is connected between node 202 and node 226. N-channel transistor 228 has its drain/source path connected between node 226 and ground. A second transistor 230 is in parallel with transistor 228 and its drain/source path is connected between node 226 and ground. A diode 232 has its anode connected to node 226 and its cathode is ORed to the output voltage node 216. The gates of transistors 228 and 230 are driven by low side driver circuits 234 and 236, respectively. Current sensing circuit 238 senses the current through transistors 210 and 212 at the source of each of these transistors that is connected to ground. Current sensor 240 senses the current through transistors 228 and 230 at the source nodes thereof, which are connected to ground. Resistor 250 is connected between the output node and node 252. Resistor 251 is connected between node 252 and GND. Node 252 is connected to the Multiphase PWM controller 242 to provide the output voltage feedback signal. The multiphase PWM controller 242, responsive to the sensed voltage feedback signals, generate four PWM phase output signals, which are provided to the low side driver circuits 220, 222, 234, and 236, respectively. These PWM signals are used by each of the low side driver circuits to generate the gate driving signals to their associated switching transistors. The current sensors 238 and 240 provide an input to a multiphase PWM controller 242. The multiphase PWM controller 242, responsive to the sensed current signals, generates the phase correction signals for accurate current sharing between each phase.

By connecting the separate phases associated with boost converter 204 and boost converter 205 together at node 216, the maximum duty cycle limitation of a boost converter can be overcome. Using the implementation of Fig. 1, the duty cycle for a boost converter having a 6 volt V_{IN} and a 24 volt V_{OUT} signal may have a steady state duty cycle of around 75%. This might exceed the maximum duty cycle specification for previous implementations. Thus, by connecting the two phase nodes in parallel, each PWM signal will be running at around 37.5% at steady state.

An additional benefit of ORing the phase nodes together is that the two phases associated with each of the boost converters 204 and 205 will have good current sharing, and since the phase node 208 and 226 will be pulled down to GND twice in one switching cycle, the inductor ripple frequency will be twice the switching frequency per phase. This enables the size of inductors 206 and 224 to be reduced by half. Thus, there are two PWM signals (PWM1, PWM2) to control one phase, and each PWM signal controls one MOSFET individually (PWM1 for 210, PWM2 for 212). Prior implementations use one PWM signal to control one phase. The benefit of using two PWM signals to control a single phase is that the configuration solves the duty cycle limitation issue for conventional multiphase boost structure.

A further benefit of the configuration of Fig. 2a arises from the fact that each phase includes two lower side MOFET switching transistors in parallel. Thus, each MOFET will conduct only half of the time compared to a conventional solution, utilizing only a single MOSFET transistor. Thus, the thermal design requirements for each MOSFET transistor are reduced enabling the use of a smaller package or heat sink with respect to the transistors.

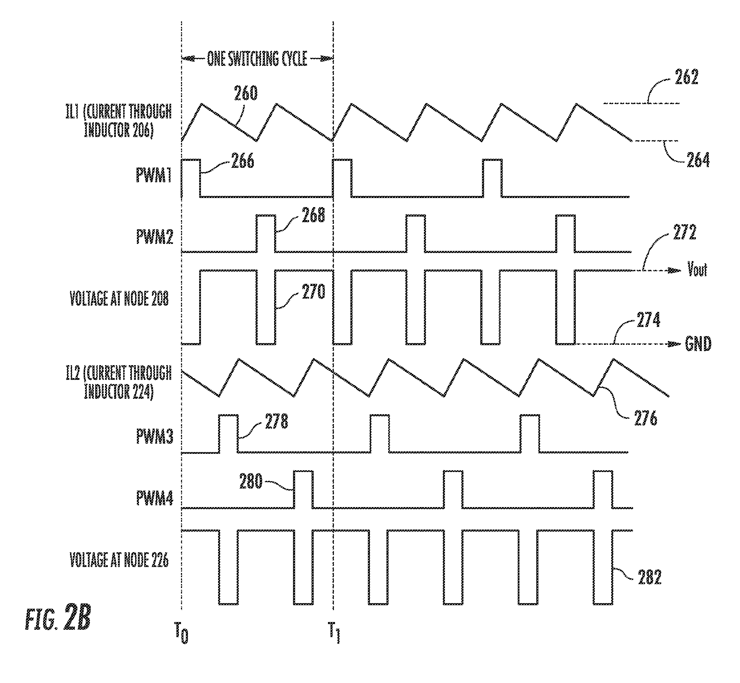

Referring now to Fig. 2b, there is illustrated a timing diagram describing the signals associated with the operation of the circuit of Fig. 2a. The period from time T₀ to time T₁ represents one switching cycle of the circuit. With respect to boost converter 204, waveform 260 represents the current I_{L} through inductor 206. The current ramps between a high level 262 and a low level 264. Waveform 266 represents the PWM1 phase signal and waveform 268 represents the PWM2 waveform. Waveform 270 represents the voltage at node 208. The voltage at node 208 sees a double frequency (i.e., switching twice during one switching cycle of the controller). The voltage waveform 270 switches between a level 272 representing the output voltage V_{OUT} and the ground level 274. The other boost converter 205 operates in a similar manner with the current through inductor 224 represented by waveform 276. The PWM3 waveform is represented at 278 and the PWM4 waveform at 280. The voltage at node 226 is represented by waveform 282. As can be seen, the voltage at node 226 also sees a double switching frequency and switches twice during one switching cycle of the controller.

As can be seen in Fig. 2b, throughout a controller switching cycle between time To and time T₁, the inductor current through inductor 206 and inductor 224 will ramp-up/down twice. This means that each inductor will see twice the switching frequency of the controller which provides another benefit enabling a choice of a smaller inductor value to achieve the same ripple requirement. For example, if V_{IN} equals 10 volts and V_{OUT} equals 20 volts, the steady state "equivalent" duty cycle at node 208 and node 226 should be 50% based upon the values of V_{IN} and V_{OUT} within prior art implementations. However, according to the present disclosure, the PWM control signals PWM1 and PWM2 will each switch 25% of the duty cycle and PWM1 and PWM2 are combined to provide a 50% equivalent duty cycle. The same thing occurs for the PWM signals PWM3 and PWM4. Thus, the ORed duty cycle is only dependent upon V_{IN} and V_{OUT} but each PWM signal will run at one-half of the duty cycle so that when combined together you obtain twice the number.

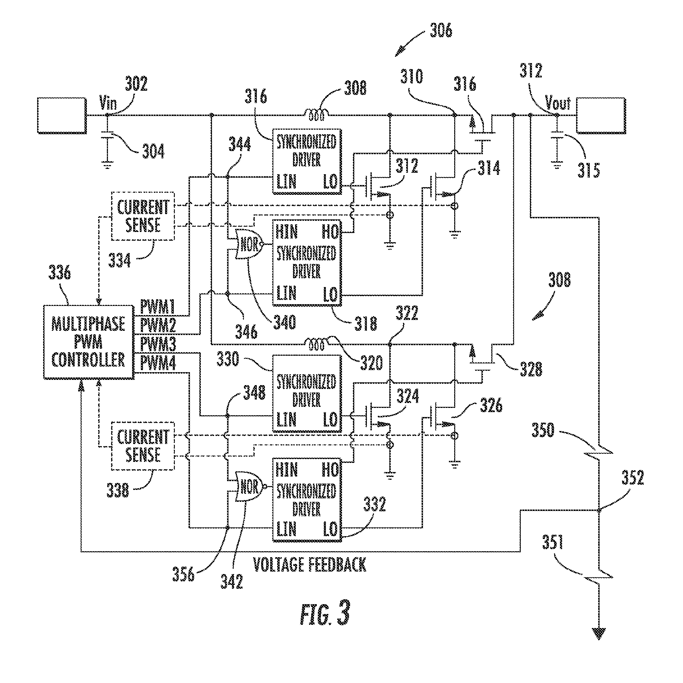

Referring now to Fig. 3, there is illustrated yet another embodiment of the multiphase boost regulator. In this embodiment, the input voltage is applied to the input voltage node 302. A capacitor 304 is connected between node 302 and ground. Connected to node 302 are a first boost regulator 306 and a second boost regulator 308. Boost regulator 306 includes an inductor 308 connected between node 302 and node 310. An N-channel transistor 312 is connected between node 310 and ground. A second N-channel transistor 314 is in parallel with transistor 312 between node 310 and ground. An N-channel transistor 316 has its source/drain path connected between node 310 and the output voltage node 312. Capacitor 315 is connected between node 312 and ground. The gates of transistor 312 is driven by the LO output of synchronized driver circuit 316. A synchronized driver 318 uses its LO output to drive the gate of transistor 314 and its HO output to drive the gate of transistor 310.

Boost regulator 308 includes an inductor 320 connected between node 302 and node 322. N-channel transistor 324 has its drain/source path connected between node 322 and ground. N-channel transistor 326 is in parallel with transistor 324 and has its drain/source path connected between node 322 and ground. Transistor 328 has its drain/source path connected between node 322 and the output voltage node 312. This ORs the output each of transistors 306 and 308 together at node 312. Synchronized driver 330 uses its LO output to drive the gate of transistor 324. Synchronized driver 332 uses its LO output to drive the gate of transistor 326 and its HO output to drive the gate of transistor 328.

Resistor 350 is connected between the output node and node 312. Resistor 351 is connected between node 352 and GND. Node 352 is connected to the Multiphase PWM controller 336 to provide the output voltage feedback signal. The multiphase PWM controller 336, responsive to the sensed voltage feedback signals, generate four PWM phase output signals, which are provided to the low side driver circuits 316, 318, 330, and 332, respectively. These PWM signals are used by each of the low side driver circuits to generate the gate driving signals to their associated switching transistors. Current sensor 334 monitors the current at the source of transistors 312 and 314 and provides an output to a multiphase PWM controller 336 responsive thereto. Current sensor 338 monitors the current at the source of transistors 324 and 326 and provides this information to the multiphase controller 336. Responsive to the sensed current signals at the source of each of these transistors, the multiphase PWM controller 336 generates the phase correction signals for accurate current sharing between each phase. Additionally connected to the H_{IN} inputs of synchronized drivers 318 and 332 is the output of a NOR gate 340 and 342, respectively. The inputs of NOR gate 340 are connected to receive the PWM1 and PWM2 signals from the multiphase PWM controller at nodes 344 and 346, respectively. NOR gate 342 is connected to receive the PWM3 and PWM4 signals from the multiphase PWM controller at nodes 348 and 350, respectively.

By using MOSFET switching and transistors 310 and 328 rather than diodes as described in previous embodiments, the system efficiency is increased by eliminating large diode induction losses. The NOR gates 340 and 342 prevent a condition that both upper and lower switching conduction are occurring between transistors 312 and 314 or transistors 324 and 326 so that a shoot through condition will not arise.

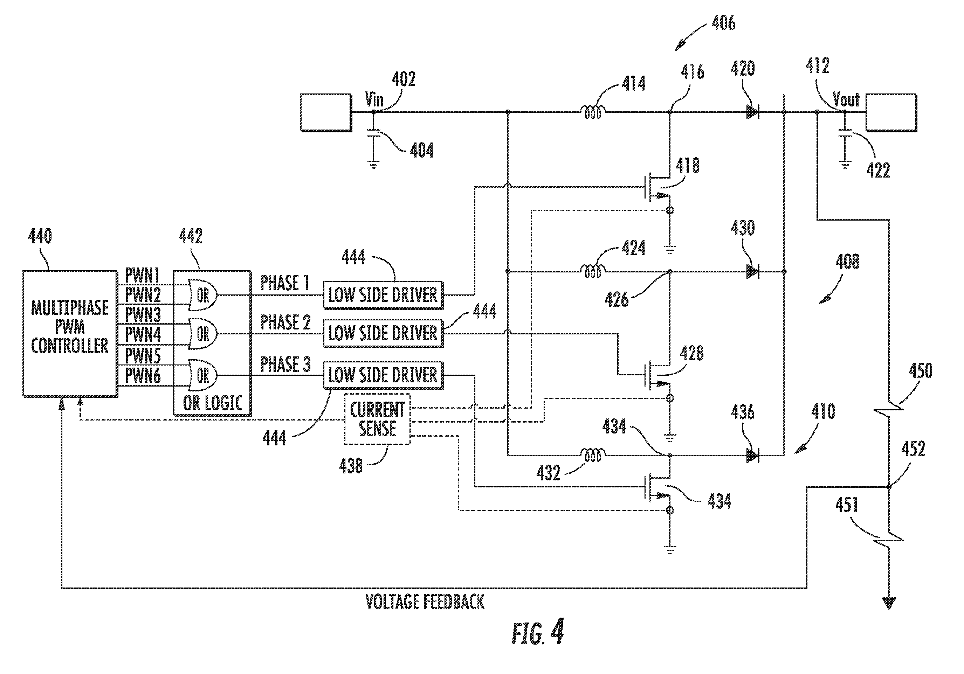

Referring now to Fig. 4, there is illustrated yet another embodiment of a multiphase boost regulator. The input voltage is applied to the input voltage node 402. A capacitor 404 is connected between the input node 402 and ground. Three boost regulators 406, 408 and 410 are connected between the input voltage node 402 and have their phase nodes all ORed together at the output voltage node 412.

Boost regulator 406 includes an inductor 414 connected between node 402 and node 416. An N-channel transistor 418 has its drain/source path connected between nodes 416 and ground. A diode 420 has its anode connected to node 416 and its cathode connected to the output voltage node 412. A capacitor 422 is connected between the output voltage node 412 and ground. The second boost regulator 408 includes an inductor 424 connected between node 402 and node 426. An N-channel transistor 428 has its drain/source path connected between nodes 426 and ground. A diode 430 has its anode connected to node 426 and its cathode connected to node 408. Boost regulator 410 includes an inductor 432 connected between node 402 and node 434. Diode 436 has its anode connected to node 434 and its cathode connected to node 412.

Resistor 450 is connected between the output node 412 and node 452. Resistor 451 is connected between node 452 and GND. Node 452 is connected to the Multiphase PWM controller 440 to provide the output voltage feedback signal. The multiphase PWM controller 440, responsive to the sensed voltage feedback signals, generate four PWM phase output signals, These PWM signals are used by each of the low side driver circuits to generate the gate driving signals to their associated switching transistors. A current sensing circuit 438 is connected to monitor the current at the source of transistors 418, 428, and 434, respectively. The current sensing circuit 438 provides this current information to a multiphase PWM controller 440 for accurate current sharing between each phase. The PWM controller 440 generates six separate PWM phase signals to OR logic 442. The OR logic 442 ORs together two PWM signals from the multiphase PWM controller 440 to generate the PHASE 1, PHASE 2 and PHASE 3 signals, respectively. The PHASE 1, PHASE 2 and PHASE 3 signals are provided to the input of low side drivers 444. The outputs of low side drivers 444 are provided to the gates of transistors 418, 428 and 434, respectively. Use of the external OR logic 444 to OR the PWM signal prior to it being sent to the driver circuits 444 eliminates the need for multiple transistors between the inductor and diode , because the PWM signals have already been ORed before sending to the gate drive of the driver, so now during one switching cycle each MOSFET will be turned on and turned off twice. The phase node 406, 426 and 434 will see exactly the same waveform as the phase node 208 and 226 in Figure 2.

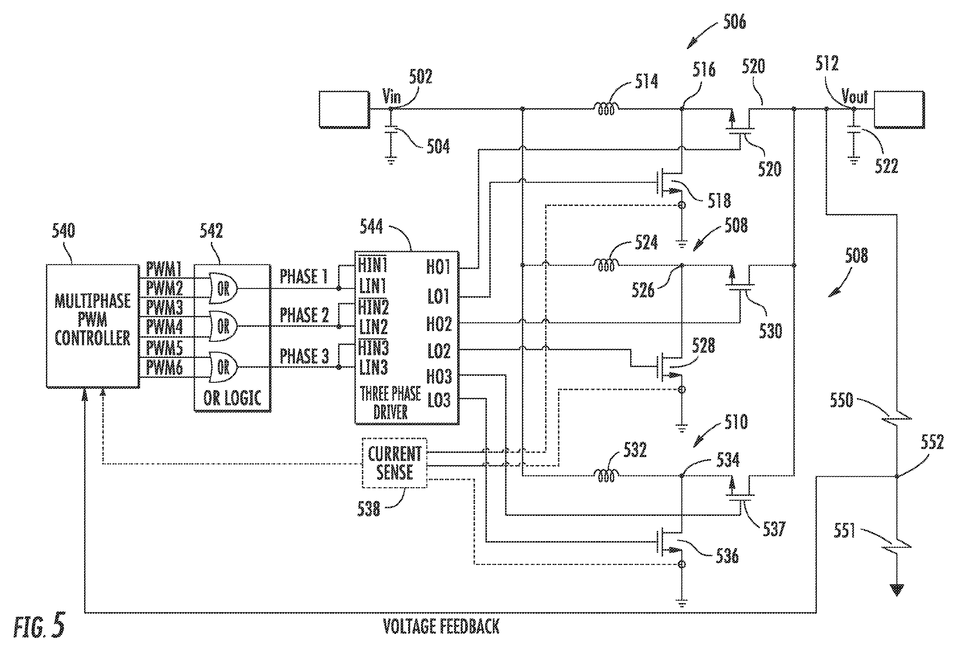

Referring now to Fig. 5, there is illustrated a further embodiment of a boost regulator. The input voltage is applied to the input voltage node 502. A capacitor 504 is connected between the input node 502 and ground. Three boost regulators 506, 508 and 510 are connected between the input voltage node 502 and have their phase nodes all ORed together at the output voltage node 512.

Boost regulator 506 includes an inductor 514 connected between node 502 and node 516. An N-channel transistor 518 has its drain/source path connected between nodes 516 and ground. A transistor 520 has its drain/source path connected between node 516 and the output voltage node 512. A capacitor 522 is connected between the output voltage node 512 and ground.

The second boost regulator 508 includes an inductor 524 connected between node 502 and node 526. An N-channel transistor 528 has its drain/source path connected between nodes 526 and ground. A transistor 530 has its drain/source path connected between node 526 and node 502. Boost regulator 510 includes an inductor 532 connected between node 502 and node 534. Transistor 536 is an N-channel transistor having its drain/source path connected between node 534 and ground. Transistor 537 has its drain/source path connected between node 534 and node 512.

Resistor 550 is connected between the output node 512 and node 552. Resistor 551 is connected between node 552 and GND. Node 552 is connected to the Multiphase PWM controller 540 to provide the output voltage feedback signal. The multiphase PWM controller 540, responsive to the sensed voltage feedback signals, generate four PWM phase output signals, These PWM signals are used by each of the low side driver circuits to generate the gate driving signals to their associated switching transistors. A current sensing circuit 538 is connected to monitor the current at the source of transistors 518, 528, and 536, respectively. The current sensing circuit 538 provides this current information to a multiphase PWM controller 540 for accurate current sharing between each phase. The PWM controller generates six separate PWM phase signals to OR logic 542. The OR logic 542 ORs together two PWM signals from the multiphase PWM controller 540 to generate the PHASE 1, PHASE 2 and PHASE 3 signals, respectively. The PHASE 1, PHASE 2 and PHASE 3 signals are provided to the input of three phase driver logic 544. The outputs of three phase driver logic 544 are provided to the gates of transistors 518, 528, 536, 520,530 and 537, respectively. The ORed phases from the OR logic 542 are applied to a three phase driver logic 534. The HO outputs of the three phase driver logic 534 are used for driving the gates of transistors 520, 530 and 537, respectively. The LO output of the three phase driver logic 534 are used for driving the gates of transistors 518, 528, and 536.

Use of the transistors 520, 530 and 537 rather than the diodes as illustrated in Fig. 4 improves system efficiency by eliminating large diode conduction losses. The use of the three phase driver logic 544 rather than the LO side drivers 444 as discussed with reference to Fig. 4 enables the synchronize boost application by providing both lower and upper gate drive signals. Thus, using the above-described implementations, the duty cycle limitations associated with existing multiphase boost converter configurations have been overcome while still maintaining good current sharing and reducing the inductor size within the associated circuitries.

It will be appreciated by those skilled in the art having the benefit of this disclosure that this system and method for ORing phases to overcome duty cycle limitations in a multiphase boost converter provides an increased duty cycle for a multi-phase boost converter. It should be understood that the drawings and detailed description herein are to be regarded in an illustrative rather than a restrictive manner, and are not intended to be limiting to the particular forms and examples disclosed. On the contrary, included are any further modifications, changes, rearrangements, substitutions, alternatives, design choices, and embodiments apparent to those of ordinary skill in the art, without departing from the spirit and scope hereof, as defined by the following claims. Thus, it is intended that the following claims be interpreted to embrace all such further modifications, changes, rearrangements, substitutions, alternatives, design choices, and embodiments.

## Claims

1. A multiphase boost converter, comprising:
a multiphase PWM controller for generating a plurality of PWM signals; and
a plurality of boost converters, each associated with a separate phase connected between an input voltage node and an output voltage node, for generating an output voltage responsive to an input voltage and the plurality of PWM signals, wherein a phase node of each of the plurality of boost converters are ORed to each other.

2. The multiphase boost converter of Claim 1, wherein each of the plurality of boost converters further comprises:
an inductor connected between the input voltage node and a phase node;
at least one switching transistor connected between the phase node and ground;
a diode connected between the phase node and the output voltage node; and
driver circuitry for controlling switching of the at least one switching transistor responsive to the PWM signals.

3. The multiphase boost converter of Claim 2, further including at least one current sensor for monitoring a current through the at least one switching transistor and generating a feedback signal to the multiphase PWM controller.

4. The multiphase boost converter of Claim 2, wherein the multiphase PWM controller generates the plurality of PWM signals responsive sensed current through the at least one switching transistor.

5. The multiphase boost converter of Claim 2, wherein the driver circuitry further comprises a low side driver circuit.

6. The multiphase boost converter of Claim 3, further including a PWM inverter for generating a plurality of inverted PWM signals for driving the at least one switching transistor responsive to the plurality of PWM signals.

7. The multiphase boost converter of Claim 1, wherein each of the plurality of boost converters further comprises:
an inductor connected between the input voltage node and a phase node;
a plurality of switching transistor connected between the phase node and ground;
a second switching transistor connected between the phase node and the output voltage node;
a first synchronized driver for controlling switching of a first of the plurality of switching transistor responsive to the PWM signals;
a second synchronized driver for controlling switching of the second switching transistor responsive to the PWM signals; and
a NOR gate for receiving the PWM signals controlling operation of the plurality of switching transistor and generating a control signal to prevent each of the plurality of switching transistor being turned on at a same time.

8. The multiphase boost converter of Claim 7 further including at least one current sensor for monitoring a current through the at least one switching transistor and generating a feedback signal to the multiphase PWM controller.

9. The multiphase boost converter of Claim 1, wherein each of the plurality of boost converters further comprises:
an inductor connected between the input voltage node and a phase node;
a switching transistor connected between the phase node and ground;
a diode connected between the phase node and the output voltage node; and
a low side driver for controlling switching of the switching transistor responsive to the PWM signals.

10. The multiphase boost converter of Claim 9, further including:
at least one current sensor for monitoring a current through the switching transistor and generating a feedback signal to the multiphase PWM controller; and
OR logic for oring together a plurality of PWM signals generated by the multiphase PWM controller and generating a control signal to the low side driver.

11. The multiphase boost converter of Claim 1, wherein each of the plurality of boost converters further comprises:
an inductor connected between the input voltage node and a phase node;
a switching transistor connected between the phase node and ground; and
a diode connected between the phase node and the output voltage node.

12. The multiphase boost converter of Claim 9, further including:
a three phase driver for controlling switching of the switching transistor responsive to the PWM signals in each of the plurality of boost converters responsive to a plurality of control signals;
at least one current sensor for monitoring a current through the switching transistor and generating a feedback signal to the multiphase PWM controller; and
OR logic for oring together a plurality of PWM signals generated by the multiphase PWM controller and generating the plurality of control signals to the three phase driver.

13. The multiphase boost converter of Claim 1, wherein each of the plurality of boost converters further comprises:
an inductor connected between the input voltage node and a phase node;
a switching transistor connected between the phase node and ground;
a second switching transistor connected between the phase node and the output voltage node;
a three phase driver for controlling switching of the switching transistor responsive to the PWM signals in each of the plurality of boost converters responsive to a plurality of control signals;
at least one current sensor for monitoring a current through the switching transistor and generating a feedback signal to the multiphase PWM controller; and
OR logic for oring together a plurality of PWM signals generated by the multiphase PWM controller and generating the plurality of control signal to the three phase driver.

14. The multiphase boost converter of Claim 1, wherein oring of the phases of each of the plurality of boost converters increases a duty cycle to a level greater than 66%.

15. A method for operating a multiphase boost converter, comprising the steps of:
connecting a phase node of a plurality of plurality of boost converters associated with the multiphase boost converter with each other;
generating a plurality of PWM signals; and
generating an output voltage responsive to an input voltage and the plurality of PWM signals.

16. The method of Claim 15, wherein the step of generating the plurality of PWM signals further comprises the steps of:
monitoring a current through at least one switching transistor of the plurality of switching transistors; and
generating control signals to control the switching of the at least one switching transistor responsive to the monitored current.

17. The method of Claim 16, wherein the step of generating control signals further comprises the steps of:
generating a plurality of PWM signals responsive to the monitored current;
and
inverting the plurality of PWM signals to provide the control signals.

18. The method of Claim 16, wherein the step of generating control signals further comprises the steps of:
generating a plurality of PWM signals responsive to the monitored current;
and
oring the plurality of PWM signals together to generate the control signals.

19. The method of Claim 15, wherein the step of generating an output voltage further comprises the step of driving a plurality of switching transistors with a multiphase driver.

20. The method of Claim 15, wherein the step of generating an output voltage further comprises the step of driving a plurality of switching transistors with a synchronized driver.
